# EUROPEAN PATENT APPLICATION

(11) **EP 2 305 899 A1**
(43) Date of publication of application: **06.04.2011**
(21) Application number: 10275090.8
(22) Date of filing: 07.09.2010
(51) Int. Cl.: E03D 5/00, E03B 1/04

(54) **Waste shower water recycle apparatus**

(30) Priority: 23.09.2009 GB 0916672
(71) Applicant: DLP Limited, Douglas, Isle of Man IM2 4RW (GB)
(72) Inventor: Stimpson, Robert William, Douglas, Isle of Man, IM2 5BN (GB)
(74) Representative: Hocking, Adrian Niall

(57) **Abstract**

Waste shower water recycle apparatus (22) is provided for receiving waste shower water from a shower drain outlet (16). The apparatus (22) comprises a waste shower water inlet (28) for receiving draining waste shower water, a potable water inlet (30), a drain outlet (32) for liquid communication with a drain, a cistern supply outlet (34) for supplying a toilet cistern (20), flow control means for controlling the flow of waste shower water from the waste shower water inlet (28) to the drain outlet (32) and to the cistern supply outlet (34), and for controlling the flow of potable water from the potable water inlet (30) to the cistern supply outlet (34), and a pump device (44) for moving waste shower water from a drain outlet (16) of a shower to the said waste shower water inlet (28). Preferably, a cleansing element (36) is provided for cleaning and sanitising, preferably disinfecting, the waste shower water prior to being supplied to the cistern supply outlet (34).

## Description

The present invention relates to apparatus which enables recycling or reuse of waste shower water for filling a toilet cistern.

Strict regulations are in force to keep any potable water supply separate of potential cross-contamination with a grey water supply, such as run-off shower water. However, it is also appreciated that a significant amount of potable water is wasted when a toilet is flushed. There is little or no benefit gained by using potable water to fill a toilet cistern, and run-off waste shower water often carries little in the way of dirt and other particulate matter.

The present invention therefore seeks to provide recycle apparatus which enables the reuse of waste shower water to refill or replenish a toilet cistern, whilst meeting domestic and/or international water regulations.

According to a first aspect of the invention, there is provided waste shower water recycle apparatus for receiving waste shower water from a shower drain outlet, the apparatus comprising a waste shower water inlet for receiving draining waste shower water, a potable water inlet, a drain outlet for liquid communication with a drain, a cistern supply outlet for supplying a toilet cistern, flow control means for controlling the flow of waste shower water from the waste shower water inlet to the drain outlet and to the cistern supply outlet, and for controlling the flow of potable water from the potable water inlet to the cistern supply outlet, and a pump device for moving waste shower water from a drain outlet of a shower to the said waste shower water inlet.

Preferable and/or optional features of the first aspect of the invention are set forth in claims 2 to 12, inclusive.

According to a second aspect of the invention, there is provided a bathroom system comprising a shower having a shower drain outlet, a toilet having a cistern, and waste shower water recycle apparatus in accordance with the first aspect of the invention, the pump device pumping waste shower water from the shower drain outlet to the waste shower water inlet of the waste shower water recycle apparatus.

The invention will now be more particularly described, by way of example only, with reference to the accompanying drawings, in which :
Figure 1 shows a diagrammatic layout of a bathroom system, in accordance with the second aspect of the invention, having a first embodiment of waste shower water recycle apparatus in accordance with the first aspect of the invention; and
Figure 2 is a diagrammatic layout of a bathroom system, in accordance with the second aspect of the invention, and having a second embodiment of waste shower water recycle apparatus in accordance with the first aspect of the invention.

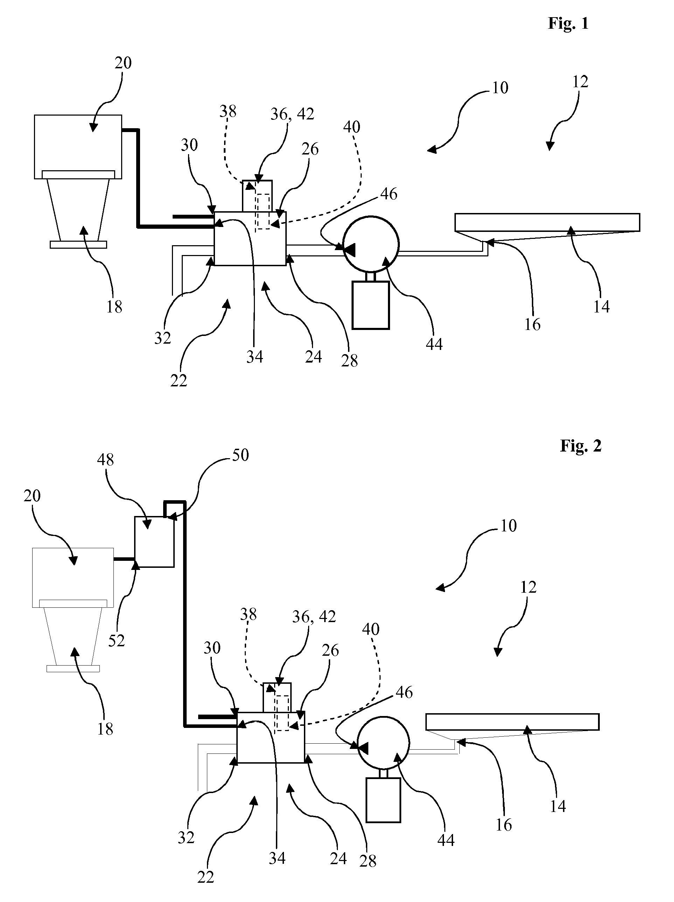

Referring firstly to Figure 1 of the drawings, there is shown a bathroom system 10 which comprises a shower 12 having a shower tray 14 and run-off waste shower water drain outlet 16 in a base of the shower tray 14, a toilet 18 having a cistern 20, and waste shower water recycle apparatus 22. Although the shower is shown as having a step-in shower tray, the shower may instead have a wet- or tanked- floor typically having a fall to the drain outlet. The fall may be formed by use of an under-surface former. The shower tray may alternatively be a level-entry shower tray.

The recycle apparatus 22 includes a recycle module or unit 24 which comprises a hollow feed housing 26 having a waste shower water inlet 28, a potable water inlet 30, a drain outlet 32, and a cistern supply outlet 34. Liquid flow paths are provided in the feed housing 26 between the waste shower water inlet 28 and the drain outlet 32 and the cistern supply outlet 34, as well as between the potable water inlet 30 and the cistern supply outlet 34. A flow control mechanism is also provided in the feed housing 26 for controlling and directing the flow on the flow paths.

The flow control mechanism is, for example, pressure operated, thus in this embodiment dispensing with the need for any electrical actuation or electrical energisation. This simplifies installation. If a pressure at the cistern supply outlet 34 is equal to or above a predetermined level, indicating that the cistern 20 is full, a valve such as a check-valve is automatically closed causing the flow path from the waste shower water inlet 28 to divert to the drain outlet 32. Thus, when the shower 12 is in use, the run-off shower water flows directly to the drain through the feed housing 26.

In the event that the toilet 18 is used whilst the shower 12 is not operational, thus reducing the pressure at the cistern supply outlet 34, a valve at the potable water inlet 30 opens to allow potable water to flow to the cistern supply outlet 34 and thus refill the cistern 20. In this case and during flow from the potable water inlet 30, a further valve may automatically close the drain outlet 32.

On the flow path from the waste shower water inlet 28 to the cistern supply outlet 34, a cleansing element 36 is preferably supplied. The cleansing element 36 includes a particulate matter filter element 38 and a sanitising, preferably disinfecting, element 40. The filter element 38 and disinfecting element 40 are preferably provided together as a single replaceable cleansing cartridge 42. Alternatively, the filter element 38 may be removable for cleaning whilst the disinfecting element 40 may be openable to enable periodic re-dosing.

The cleansing element 36 thus enables removal of a majority of hair, skin, dirt and other particulate matter from the flow of waste water from the waste shower water inlet 28 to the cistern supply outlet 34, and the disinfectant element exposes the said flow of waste water to a chemical agent which destroys, or inhibits the growth of, harmful waterborne organisms or contaminants.

Although preferably a single removable and replaceable cartridge, the cleansing element 36 may have a separate filter element and disinfecting element.

It is envisaged that the cleansing element will only be located on the flow path between the waste shower water inlet 28 and the cistern supply outlet 34. The cleansing element is preferably bypassed on the flow path between the potable water inlet 30 and the cistern supply outlet 34, and between the waste shower water inlet 28 and the drain outlet 32.

To provide sufficient pressure at the cistern supply outlet 34 in order to refill or replenish a toilet 18 cistern 20, it is advantageous that the recycle apparatus 22 includes a pump device 44. Beneficially, the shower 12 will already include a pumped waste for the forced movement of draining waste water away from the shower drain outlet 16. It is thus convenient to provide the feed housing 26 inline and downstream of the pump device 44. To this end, the waste shower water inlet 28 of the feed housing 26 is connected to a waste water outlet 46 of the pump device 44. Thus, the pump device 44 is typically independent of and spaced from the feed housing 26.

However, it is possible that the pump device 44 can be provided in or on the feed housing 26, thereby providing an integral unit for installation in a bathroom area.

Referring to Figure 2, a second embodiment of the waste shower water recycle apparatus 22 is shown provided as part of the bathroom system 10. The features of this embodiment are the same as those of the first embodiment, except with the addition of a treated water reservoir 48. To this end, like references refer to like parts, and further detailed description is omitted.

The treated water reservoir 48 is connected to the cistern supply outlet 34 of the feed housing 26, and includes a treated water inlet 50 and a treated water outlet 52. The reservoir 48 functions as a supplementary cistern so that, if the toilet 18 is flushed whilst the shower 12 is not being used, the cistern 20 is refilled or replenished by the reservoir 48. The reservoir 48 is then refilled once the shower 12 is run, via the waste shower water being directed through the feed housing 26 to the cistern supply outlet 34.

Preferably, the reservoir 48 would be automatically drained following a predetermined period, such as two hours, via the feed housing 26 to the drain outlet 32 to prevent undue standing of the grey water.

It is possible that a pump device can be provided in the reservoir 48 for drawing water from the feed housing 26. Additionally or alternatively, a pump device could be retro-fittable inside the cistern 20 again to draw treated water from the feed housing 26 as necessity dictates. These pump devices may be in addition to or as an alternative to the pump device 44 of the shower 12, mentioned in the first embodiment.

In both of the above embodiments, a timer may be included as part of the recycle apparatus 22, typically being provided within the feed housing 26. Once the cistern 20 is used, if the shower 12 is then not immediately used thereafter, the refilling of the cistern 20 may be delayed by a period which is preferably selectable by the user. Following this predetermined period, if no waste shower water enters the feed housing 26, then the flow control mechanism opens the potable water inlet 30 to enable filling of the cistern 20 and/or the reservoir 48 with potable water.

In the event that the waste shower water does not fully fill or replenish the cistern 20 and/or reservoir 48, then after a predetermined period, again preferably settable by the user, the flow control mechanism opens the potable water inlet 30 to complete the filling of the cistern 20 and/or reservoir 48.

In the alternative case, if the cistern 20 and/or reservoir 48 becomes full with grey treated water, the flow control mechanism closes the cistern supply outlet 34 and redirects the flow path to the drain outlet 32.

Preferably, a manual override will also be provided to enable a user to directly activate filling of the cistern 20 and/or reservoir 48 via the potable water inlet 30. In this case, the flow control mechanism would direct a flow path in the feed housing 26 from the waste shower water inlet 28 straight to the drain outlet 32, preferably bypassing the cleansing element 36.

Although the flow control mechanism is preferably pressure operated, other flow control means can be envisaged and the use of electrically controllable actuators for opening and closing any or all of the inlets and outlets can be considered.

It is thus possible to provide waste shower water recycle apparatus which can receive waste shower water from a shower drain outlet and supply it to a toilet cistern and/or a supplementary cistern reservoir. It is also possible to provide such apparatus which can include a connection to a potable water supply in the event that insufficient grey water is available from the shower. The apparatus also includes a drain connection for direct draining of the waste shower water if the cistern and/or reservoir is full. A flow control mechanism of the apparatus is also preferably mechanical and/or hydraulic without requiring the use of electrical components. The apparatus is also beneficial in that it can be used in conjunction with a shower water drain pump which provides the pumping pressure for filling the cistern and/or reservoir. The apparatus, in this latter case, can thus be retro-fittable downstream of an existing installed shower drain pump. By use of the cleansing element, the required water regulations for the reuse of grey water can be met.

The embodiments described above are provided by way of examples only, and various other modifications will be apparent to persons skilled in the art without departing from the scope of the invention as defined by the appended claims.

## Claims

1. Waste shower water recycle apparatus (22) for receiving waste shower water from a shower drain outlet (32), the apparatus (22) comprising a waste shower water inlet (28) for receiving draining waste shower water, a potable water inlet (30), a drain outlet (32) for liquid communication with a drain, a cistern supply outlet (34) for supplying a toilet cistern (20), flow control means for controlling the flow of waste shower water from the waste shower water inlet (28) to the drain outlet (32) and to the cistern supply outlet, and for controlling the flow of potable water from the potable water inlet (30) to the cistern supply outlet (34), and a pump device (44) for moving waste shower water from a drain outlet of a shower (12) to the said waste shower water inlet (28).

2. Waste shower water recycle apparatus (22) as claimed in claim 1, further comprising a cleansing element (36) on a flow path between the waste shower water inlet (28) and the cistern supply outlet (34).

3. Waste shower water recycle apparatus (22) as claimed in claim 2, wherein the cleansing element (36) includes a particulate matter filter element (38).

4. Waste shower water recycle apparatus (22) as claimed in claim 3, wherein the filter element (38) is removable.

5. Waste shower water recycle apparatus (22) as claimed in any one of claims 2 to 4, wherein the cleansing element (36) further includes a sanitising element (40) liquidly communicable with the cistern supply outlet (34).

6. Waste shower (12) water reuse apparatus (22) as claimed in claim 5, wherein the sanitising element (40) includes a removable cartridge for holding a sanitising agent.

7. Waste shower water recycle apparatus (22) as claimed in any one of the preceding claims, wherein the flow control means includes a pressure-operable mechanism for controlling one or more liquid flow paths between the potable water inlet (30) and the cistern supply outlet (34), the waste shower water inlet (28) and the cistern supply outlet (34), and the waste shower water inlet (28) and the drain outlet (32).

8. Waste shower water recycle apparatus (22) as claimed in claim 7, wherein the pressure-operable mechanism is without electrical energisation.

9. Waste shower water recycle apparatus (22) as claimed in claim 7 or claim 8, wherein the flow control means includes a timer for delaying an opening of a flow path from the potable water inlet (30) to the cistern supply outlet (34).

10. Waste shower water recycle apparatus (22) as claimed in any one of the preceding claims, further comprising a treated grey-water reservoir (48) which is liquidly communicable with the cistern supply outlet (34), the reservoir (48) having a treated grey-water inlet and a treated grey-water outlet for supplying a toilet cistern (20).

11. Waste shower water recycle apparatus (22) as claimed in claim 11 or claim 12, further comprising a feed housing (26) on which is provided the waste shower water inlet (28), the potable water inlet (30), the drain outlet (32), and the cistern supply outlet (34), the pump device (44) being separate of the feed housing (26).

12. Waste shower water recycle apparatus as claimed in any one of claims 1 to 10, further comprising a feed housing (26) on which is provided the waste shower water inlet (28), the potable water inlet (30), the drain outlet (32), and the cistern supply outlet (34), the pump device (44) being in or on the feed housing (26).

13. A bathroom system (10) comprising a shower (12) having a shower drain outlet (32), a toilet (18) having a cistern (20), and waste shower water recycle apparatus (22) as claimed in any one of the preceding claims, the pump device (44) pumping waste shower water from the shower drain outlet (32) to the waste shower water inlet (28) of the waste shower water recycle apparatus (22).
